# EUROPÄISCHE PATENTSCHRIFT

(11) **EP 4 414 566 B1**
(45) Veröffentlichungstag und Bekanntmachung des Hinweises auf die Patenterteilung: **26.03.2025**
(21) Anmeldenummer: 24154338.8
(22) Anmeldetag: 29.01.2024
(51) Int. Cl.: F16B 3/06

(54) **LÖSBARER SPREIZBOLZEN, VERBINDUNGSANORDNUNG SOWIE VERFAHREN ZUM ERSTELLEN EINER SOLCHEN VERBINDUNGSANORDNUNG**
RELEASABLE EXPANDING BOLT, CONNECTION ASSEMBLY AND METHOD FOR PRODUCING SUCH A CONNECTION ASSEMBLY
BOULON D'ÉCARTEMENT LIBÉRABLE, SYSTÈME DE LIAISON ET PROCÉDÉ DE FABRICATION D'UN TEL SYSTÈME DE LIAISON

(30) Priorität: 07.02.2023 DE 102023102863
(43) Veröffentlichungstag der Anmeldung: 14.08.2024
(73) Patentinhaber: Heico Befestigungstechnik GmbH, 59469 Ense-Niederense (DE)
(72) Erfinder: SCHNEIDER, Norbert, 59469 Ense-Niederense (DE); KOTHENSCHULTE, Jens, 59469 Ense-Niederense (DE)
(74) Vertreter: Haverkamp Patentanwälte PartG mbB

(56) Entgegenhaltungen:
- EP-B1- 3 658 785
- DE-A1- 1 750 905

## Beschreibung

Die Erfindung betrifft einen lösbaren Spreizbolzen mit
- einer Spreizhülse mit einem ersten Ende, einem zweiten Ende, einer zylindrischen äußeren Mantelfläche und innenseitig mit einem zum zweiten Ende hin die Querschnittsfläche verjüngenden Innenkonusabschnitt,
- einem Konusbolzen mit einem mit dem Innenkonusabschnitt der Spreizhülse zum Spreizen derselben infolge einer axialen Relativbewegung von Spreizhülse und Konusbolzen zusammenwirkenden Konusabschnitt und
- einer an den das erste Ende der Spreizhülse bereitstellenden Endabschnitt angeschlossene Spanneinrichtung zum Verstellen des Konusbolzens in axialer Richtung gegenüber der Spreizhülse.

Spreizbolzen werden zum Herstellen von formschlüssigen Verbindungen etwa von Flanschverbindungen eingesetzt, wenn besonders hohe Drehmomente oder Querkräfte bezüglich der Flanschachse zu übertragen sind. Ein Anwendungsgebiet für derartige Spreizbolzen sind etwa Windkraftanlagen, etwa zum Herstellen einer drehstarren Verbindung zwischen zwei Wellenflanschen im Antriebsstrang.

Vielfach werden für derartige formschlüssige Verbindungen Spreizbolzen eingesetzt, die mit ihrem Bolzen in eine Sackbohrung eingreifen. Ein Spreizbolzen der in Rede stehenden Art umfasst einen Bolzen, der als Verankerungsmittel ein Gewindeabschnitt aufweisen kann, mit dem dieser in einem in eine Sackbohrung eines ersten Montageteils eingebrachte Innengewindebohrung festgelegt wird. Erforderlich ist eine in axialer Richtung des Bolzens wirkende Verankerung zum Aufbringen der gewünschten Zugkräfte beim Spannen desselben. Dieser Bolzen verfügt über einen kegelstumpfförmigen Konusabschnitt, der auf eine auf diesem sitzende Spreizhülse mit einer komplementären Innenkonuskontur wirkt. Ein solcher Bolzen ist daher im Rahmen dieser Ausführungen auch als Konusbolzen angesprochen. Der Konusabschnitt ist von dem Verankerungsmittel des Konusbolzens wegweisend verjüngt. Die Verjüngung ist damit in Richtung zur Mündung der Sackbohrung ausgeführt. Durch Bewegen der Spreizhülse gegenüber dem Konusbolzen in axialer Richtung kann erstere aufgeweitet werden. Die Spreizhülse ist typischerweise geschlitzt. Ein solcher Spreizbolzen ist aus EP 2 191 150 B1 bekannt. Bei diesem vorbekannten Spreizbolzen trägt die Spreizhülse in ihrem aus einer Montagebohrung herausragenden Abschnitt ein Außengewinde. An dem als Gewindeabschnitt ausführten Verankerungsmittel gegenüberliegenden Ende trägt der Konusbolzen einen Gewindeabschnitt, auf dem eine Spannmutter, typischerweise mit einer äußeren Werkzeugkontur zum Ansetzen eines Spannwerkzeuges aufgeschraubt ist. Auf den Außengewindeabschnitt der Spreizhülse ist eine Klemmmutter aufgeschraubt. Nach Festsetzen des Konusbolzens mit seinem als Gewindeabschnitt ausgeführten Verankerungsmittel in der Sackbohrung eines ersten Montageteils wird die Spreizhülse in die Montagebohrung eingesetzt. Hierbei ist Sorge dafür zu tragen, dass zwischen der Klemmmutter und der Außenseite des zweiten Montageteils ein Spalt verbleibt. Anschließend wird die Spannmutter auf der Gewindeabschnitt des Konusbolzens aufgeschraubt, bis diese zur Anlage an der Spreizhülse gelangt. Durch weiteres Aufschrauben wird vor dem Hintergrund der Verankerung des Konusbolzens in dem Sackloch die Spreizhülse in die Montagebohrung entgegen der zur Spannschraube gerichteten Verjüngung des Konusabschnittes sowie der Innenkonuskontur der Spreizhülse eingepresst. Dieses bedingt ein Aufweiten der Spreizhülse bis der vorbeschriebene Spalt geschlossen ist. Über die Spaltweite zwischen der Klemmmutter und der Außenseite des zweiten Montageteils vor dem Spannen der Spannmutter ist die radiale Vorspannung, die über die Spreizhülse in die die Montagebohrung umgebende Wand der beiden zu verspannenden Montageteile eingebracht wird, einrichtbar. Ein weiteres Spannen der Spannmutter nach Schließen des Spaltes erzeugt die gewünschte Axialkraft auf die miteinander zu verspannenden Montageteile.

Ein weiterer Spreizbolzen ist aus EP 3 658 785 B1 bekannt. Bei diesem Spreizbolzen verjüngen sich die Konusabschnitte in Richtung zu dem fußseitig bezüglich des Konusbolzens vorgesehenen Gewinde, mit dem der Spreizbolzen mit dem Spannwiderlager verbunden ist. Bei diesem Spreizbolzen verfügt die Spreizhülse über einen in radialer Richtung abragenden Spannflansch. Zwischen dem Spannflansch und der Oberfläche des bedienseitig angeordneten Montageteils befindet sich die Spanneinrichtung, die über eine Mehrzahl an umfänglich verteilt angeordneten Spannbolzen bei gleichzeitiger Abstützung an der Oberfläche des bedienseitigen Montageteils gespannt wird. Insofern wird bei diesem Spreizbolzen die Hülse aus der den Spreizbolzen aufnehmenden Spreizbolzenbohrung der Montageteile herausgezogen. Vorteilhaft bei diesem Spreizbolzen ist, dass dieser durch Aufbringen einer in axialer Richtung wirkenden Lösekraft mit einfachen Mitteln gelöst werden kann. Dieses ist mitunter erforderlich.

Neben Spreizbolzen der vorbeschriebenen Art werden auch solche eingesetzt, bei denen der Spreizbolzen nicht an ein axiales Spannwiderlager angeschlossen ist, sei es eine Gewindebohrung in dem der Bedienseite entfernt befindlichen Montageteils oder eine Widerlagermutter, wenn der Spreizbolzen mit seinem Gewindeabschnitt die miteinander zu verbindenden Montageteile durchgreift und auf den Gewindeabschnitt eine Gewindelagermutter aufgeschraubt ist. Diese Spreizbolzen werden eingesetzt, wenn vor allem Querkräfte bzgl. der Achse des Spreizbolzens zwischen den miteinander zu verbindenden Montageteilen aufzunehmen sind. Bei diesem Spreizbolzen ist die konische Verjüngung der Spreizhülse und diejenige des damit zusammenwirkenden Konusbolzens in Richtung zur Bedienseite hin orientiert. Gespannt wird dieser Spreizbolzen durch Anlegen einer auf den Konusbolzen wirkenden Zugkraft.

Den vorbeschriebenen Spreizbolzen ist gemein, dass zum Spannen derselben das Spannwerkzeug auf der zur Bedienseite weisenden Oberfläche eines Montageteils abgestützt werden muss. Dieses impliziert, dass an den miteinander zu verbindenden Montageteilen in radialer Richtung zu der Spreizbolzenbohrung außenseitig entsprechend Platz, und zwar zum Unterbringen der Spanneinrichtung und zum Ansetzen eines Spannwerkzeuges vorhanden sein muss. Dieses ist nicht immer der Fall.

Gespannt werden derartige Spreizbolzen typischerweise mit hydraulischen Spannwerkzeugen, die mit sehr hohen Drücken (typischerweise von etlichen 100 bar) betrieben werden. Ein aus einem allfälligen Leck austretender Ölstrahl kann Menschen schwer verletzen. Dieses ist aus sicherheitstechnischen Aspekten vor allem dann problematisch, wenn derartige Spreizbolzen in einem beengten Raum, beispielsweise innerhalb einer Hohlwelle, angeordnet sind und dort gespannt werden müssen. Dieses ist etwa bei der Verbindung der Rotorwelle einer Windkraftanlage mit der Getriebewelle erforderlich. Zu diesen Zweck muss sich ein Handwerker mit dem Spannwerkzeug in die Hohlwelle begeben. Bei einem allfälligen Leck in der Hydraulik kann der Handwerker nicht schnell genug aus dem Gefahrenbereich fliehen, um sich vor Verletzungen zu schützen.

Aus US 4 135 432 sowie US 2004/0136802 A1 sind Spannbolzen bekannt, deren Spreizhülse formschlüssig in axialer Richtung in einem Bohrloch verankert wird. Diese Spreizbolzen sind nicht lösbar.

Ausgehend von dem vorstehend diskutierten Stand der Technik liegt der Erfindung daher zum einen die Aufgabe zu Grunde, einen Spreizbolzen vorzuschlagen, der nicht nur bei beengten Einbauverhältnissen genutzt werden kann, sondern dessen Spannen zudem mit einfacheren Mitteln möglich ist.

Gelöst wird die auf den Spreizbolzen bezogene Aufgabe erfindungsgemäß durch einen eingangs genannten Spreizbolzen mit den Merkmalen des Anspruchs 1 gelöst.

Die verfahrensbezogene Aufgabe wird erfindungsgemäß durch ein Verfahren mit den Merkmalen des Anspruchs 15 gelöst.

Dieser Spreizbolzen benötigt, damit dieser gespannt werden kann, kein in axialer Richtung wirkendes Widerlager. Beim Spannen dieses Spreizbolzens stellt dieser ein geschlossenes Kraftsystem dar. Dieses ist von besonderem Vorteil, da dieser Spreizbolzen daher in einer gewindelosen Bohrung, insbesondere einer gewindelosen Sackbohrung verspannt werden kann. Erreicht wird dieses damit, dass bei diesem Spreizbolzen der Konusbolzen zum Spannen des Spreizbolzens bewegt wird, um die Spreizhülse aufzuweiten, diese Bewegung des Konsubolzens in axialer Richtung von der Bedienseite weg erfolgt und der Druckbolzen in axialer Richtung wirkend formschlüssig an der Konushülse abgestützt ist. Dieser Spreizbolzen benötigt daher kein zusätzliches Spannwiderlager, wie dieses bei herkömmlichen Spreizbolzen der Fall ist. Da bei diesem Spreizbolzen der Konusbolzen entsprechend der vorgesehenen Orientierung der Konusverjüngungen in die Spreizhülse eingedrückt wird, wird ebenfalls kein Oberflächenanteil des bedienseitig befindlichen Montageteils zum Platzieren eines Spannwiderlagers benötigt. Dieses begründet den extrem geringen Platzbedarf, den ein solcher Spreizbolzen benötigt. Der Spreizbolzen selbst benötigt nicht mehr Einbauraum als durch die Spreizbolzenbohrung ohnehin vorgesehen. Dies bedeutet, dass dieser Spreizbolzen ausgelegt werden kann, damit dieser in radialer Richtung nicht über den Außendurchmesser der Spreizbolzenbohrung hinausragt. Da der Druckbolzen zentrisch in Bezug auf die Längsachse des Spreizbolzens angeordnet ist, ist auch der Raumbedarf zum Platzieren eines Spannwerkzeuges auf ein notwendiges Minimum reduziert. Dieser ist lediglich durch die Größe des eingesetzten Spannwerkzeuges bestimmt. Infolge der zentrischen Anordnung des zum Spreizen dieses Spreizbolzens vorgesehenen einzigen Druckbolzens kann dieser mit einem relativ klein dimensionierten Spannwerkzeug angezogen und damit der Spreizbolzen gespannt werden. Ein solcher Spreizbolzen kann ohne weiteres auch bei größeren Durchmessern mit einem angetriebenen Spannwerkzeug, etwa mit einem pneumatischen Drehschrauber oder elektrisch mit einem leistungsfähigen Akkuschrauber gespannt werden.

Vorteilhaft ist, wenn ein solches Spannwerkzeug ein zu seinem Kraftübertragungskopf, der zum Anziehen des Druckbolzens des Spreizbolzens mit seiner Antriebskontur in Eingriff gestellt wird, einen koaxialen Reaktionsarm aufweist, der in Drehrichtung formschlüssig an dem bedienseitigen Ende des Spreizbolzens vorgesehenen Strukturen abgestützt ist. Diese Abstützung kann zugleich genutzt werden, dass die Spreizhülse ortsfest verbleibt und das Spannen des Druckbolzens alleinig zu einer axialen Verstellbewegung des Konusbolzens innerhalb der Spreizhülse führt. Eine solche Reaktionsarmabstützung ist grundsätzlich nicht erforderlich. Der Spreizbolzen kann auch ohne eine solche Reaktionsarmabstützung oder auch mit einer anderen Reaktionsarmabstützung gespannt werden. Genutzt wird in einem solchen Fall der Reibschluss zwischen der äußeren zylindrischen Mantelfläche der Spreizhülse und der Innenwand der Spreizbolzenbohrung.

Durchaus möglich ist die Ausgestaltung einer Spreizhülse eines solchen Spreizbolzens, die außenseitig Verklammerungsstrukturen, beispielsweise umfänglich angeordnete Verklammerungsrippen trägt, die in die Folge des Aufweitens der Spreizhülse in die Wandung der Spreizbolzenbohrung eingedrückt werden. Dann können mit dem Spreizbolzen auch axiale Kräfte zwischen den Montageteilen formschlüssig übertragen werden.

Gemäß einer Ausgestaltung eines solchen Spreizbolzens ist der Druckbolzen mit der Spreizhülse in ihrem ersten Endabschnitt - dem bedienseitigen Endabschnitt - über ein Gewinde mit dieser in Eingriff gestellt. Hierdurch ist der Druckbolzen zum einen in axialer Richtung formschlüssig an der Spreizhülse abgestützt und zugleich durch die Möglichkeit des Einschraubens gegenüber der Spreizhülse in axialer Richtung verstellbar. Eine solche Ausgestaltung eignet sich insbesondere für im Durchmesser geringere Spreizbolzen.

Gemäß einer anderen Ausgestaltung ist vorgesehen, dass der Druckbolzen unter Zwischenschaltung eines Widerlagerkörpers an der Spreizhülse gehalten und gegenüber dieser in axialer Richtung verstellbar ist. Dieser Widerlagerkörper ist innenseitig an den ersten Endabschnitt der Spreizhülse in axialer Richtung formschlüssig an diese angeschlossen. Ferner verfügt ein solcher Widerlagerkörper über eine zentrale, mit einem Innengewindes ausgerüstete Durchgangsbohrung. Diese durchgreift der Druckbolzen, der dieses Innengewinde kämmt. Der Kraftfluss ist auch bei einer solchen Ausgestaltung beim Spannen des Spreizbolzens geschlossen. Gemäß einem bevorzugten Ausführungsbeispiel ist der Widerlagerkörper mit der Spreizhülse verschraubt. An dieser Stelle kann jedoch auch eine anders geartete, in axialer Richtung formschlüssige Verbindung vorgesehen sein, beispielsweise eine Steck-Dreh-Verbindung nach Art einer Bajonett-Verriegelung. Im Falle des Vorsehens einer Gewindeverbindung zwischen der Spreizhülse und dem Widerlagerkörper trägt die Spreizhülse in ihrem ersten Endabschnitt ein Innengewinde und der Widerlagerkörper ein dazu komplementäres Außengewinde. Auch bei dieser Ausgestaltung wird in radialer Richtung nicht mehr Raum beansprucht als der Durchmesser der Spreizhülse beträgt.

Zweckmäßig ist bei der Ausführung eines Spreizbolzens mit einem solchen Widerlagerkörper, der mittels eines Gewindes an die Spreizhülse angeschlossen und gehalten ist, wenn diese Schraubverbindung mit einem Anschlag ausgerüstet ist, durch den die Einschraubtiefe des Widerlagerkörpers begrenzt ist. Gemäß einem Ausführungsbeispiel ist hierzu ein außenseitig abragender, umlaufender Anschlagflansch am Widerlagerkörper vorgesehen, der gegen die Stirnfläche des ersten Endes der Spreizhülse wirkt. Gemäß einer anderen Ausgestaltung befindet sich innerhalb der Spreizhülse ein Anschlag, gegen den der Widerlagerkörper wirkt. Bei einer solchen Ausgestaltung kann der innerhalb der Spreizhülse befindliche Anschlagabsatz in einer solchen Tiefe ausgeführt sein, dass der Widerlagerkörper mit dem diesen durchgreifenden Druckbolzen bei gespanntem Spreizbolzen insgesamt in den ersten Endabschnitt der Spreizhülse eingetaucht ist, mithin nicht gegenüber dem ersten Ende der Spreizhülse hervorsteht. Vorteilhaft bei einer solchen Ausgestaltung ist, dass, wenn es sich bei den beiden Montageteilen um Flansche zum Verbinden etwa von zwei Wellenteilen handelt, von den Flanschoberseiten keine Befestigungsmittel abragen. Dann kann zudem der erste Endabschnitt der Spreizhülse Stützstrukturen für den drehmomentschlüssigen Anschluss eines Reaktionsarmes eines Spannwerkzeuges aufweisen.

In einer alternativen Ausgestaltung kann der Reaktionsarm des Spannwerkzeuges am Widerlagerkörper abgestützt werden. Dann sind die Stützstrukturen für den drehmomentschlüssigen Anschluss des Reaktionsarmes statt an der Konushülse am Widerlagerkörper vorgesehen. Vorzugsweise ist bei letzterer Ausgestaltung die Gewinderichtung zwischen dem Innengewinde des Widerlagerkörpers und seinem Außengewinde entgegengesetzt zueinander, damit nicht die Gefahr besteht, dass beim Anziehen des Druckbolzens die Verschraubung des Widerlagerkörpers mit der Spreizhülse gelöst wird.

Die Ausgestaltung eines Spreizbolzens, dessen Druckbolzen unter Zwischenschaltung eines Widerlagerkörpers an die Spreizhülse angeschlossen ist, eignet sich besonders für Spreizbolzen mit einem größeren Durchmesser. In einem solchen Fall ist es zweckmäßig, wenn zwischen dem Fuß des Druckbolzens, also demjenigen Ende des Druckbolzens, welches seiner Antriebskontur gegenüberliegt, und dem Konusbolzen ein Druckverteilungselement angeordnet ist. Durch ein solches Druckverteilungselement wird typischerweise die aufgrund des geringeren Durchmessers des Druckbolzens gegenüber dem Durchmesser des Konusbolzens nur auf den Zentrumsbereich gerichtete Spannkraft des Druckbolzens auf die zur Verfügung stehende Oberfläche des zum Druckbolzen weisenden Endes des Konusbolzen verteilt. Es hat sich als zweckmäßig erwiesen, wenn die Spannkraft zum axialen Verstellen des Konusbolzens zum Spannen des Spreizbolzens eher umfänglich in seinen äußeren Randbereich auf den Konusbolzen aufgebracht wird als lediglich in einem begrenzten zentrischen Bereich. Ist eine solche Kraftübertragung von dem Druckbolzen auf den Konusbolzen vorgesehen, kann das Kraftverteilungselement nach Art einer Scheibe ausgebildet sein und an ihrer zum Konusbolzen weisenden Seite im Bereich seines radialen Abschlusses einen umlaufenden Druckring tragen.

Der erfindungsgemäße Spreizbolzen ist auch mit einfachen Mitteln lösbar. Begründet liegt dieses darin, dass zum Spannen des Spreizbolzens der Konusbolzen in axialer Richtung in die Spreizhülse eingedrückt wird. Daher kann dieser Spreizbolzen unproblematisch durch Herausziehen des Konusbolzens aus der Spreizhülse gelöst werden. Dabei bildet typischerweise die Spreizhülse selbst bzw. die Außenseite eines Widerlagerkörpers das Gegenlager. Um den Konusbolzen aus seiner den Spreizbolzen verspannenden Stellung innerhalb der Spreizhülse herauszuziehen, ist vorgesehen, zentrisch in die zum Druckbolzen weisende Endfläche des Konusbolzens eine Negativkontur als Anschlusskontur einzubringen, an die ein Anschlussteil eines Lösewerkzeuges in axialer Richtung formschlüssig angeschlossen werden kann. Bei einer solchen Anschlusskontur kann es sich beispielsweise um ein Innengewinde oder auch um einen Bestandteil einer Bajonett-Verriegelung handeln. Zum Lösen des Spreizbolzens wird diese Anschlusskontur zugänglich gemacht. Je nach Ausgestaltung des Spreizbolzens ist es hierfür allein erforderlich, den Druckbolzen herauszuschrauben oder den Widerlagerkörper zusammen mit dem Druckbolzen aus der Gewindehülse herauszuschrauben und, falls vorhanden, das Kraftverteilungselement herauszunehmen. Dann ist die Anschlusskontur aus axialer Richtung von der Bedienseite her zugänglich.

Bei einer Ausgestaltung, bei der die bedienseitige Seite des Spreizbolzens zumindest einer Stützstruktur zum Abstützen eines Drehmomentes eines Reaktionsarmes eines Spannwerkzeuges aufweist, ist es zweckmäßig, wenn mehrere Stützstrukturen vorhanden sind und diese konzentrisch zu dem Druckbolzen und mit gleichem Winkelabstand zueinander angeordnet sind. Der damit in Eingriff zu stellende Reaktionsarm ist koaxial ausgelegt und weist eine entsprechende komplementäre Eingriffskontur auf.

Bei einer Verbindungsanordnung, bei der zumindest zwei Montageteile durch einen solchen Spreizbolzen miteinander verbunden werden sollen, ist es zweckmäßig, wenn zum Definieren der Einstecktiefe des Spreizbolzens innerhalb der Spreizbolzenbohrung eines Montageteils ein Anschlagabsatz vorgesehen ist. Dieser Anschlagabsatz wirkt gegen die freie Stirnfläche oder einen Absatz am Außendurchmesser der Spreizhülse.

Eine Verbindungsanordnung, umfassend zumindest zwei miteinander zu verbindende Montageteile und zumindest einen Spreizbolzen der vorstehend genannten Art, wird wie folgt erstellt:
- Zunächst werden die miteinander zu verbindenden Montageteile zueinander so angeordnet, dass ihre Spreizbolzenbohrungen miteinander fluchten, d.h. koaxial ausgerichtet sind.
- Der darin einzusetzende Spreizbolzen ist vormontiert, das heißt, dass in die Spreizhülse der Konusbolzen eingeführt und durch die Spanneinrichtungen fixiert, ggf. sogar etwas vorgespannt ist. Dies bedeutet, dass in die Spreizhülse ebenfalls der Druckbolzen, ggf. unter Zwischenschaltung eines Widerlagerkörpers eingeschraubt ist. Dieser vormontierte Spreizbolzen wird in die zueinander koaxialen Spreizbolzenbohrungen von einer Seite - der Bedienseite der Verbindungsanordnung - eingesetzt, vorzugsweise bis zu einem in der Spreizbolzenbohrung befindlichen Anschlagabsatz. Dieser wirkt gegen die in diese Richtung weisenden Anschlagabsatz der Spreizhülse, bevorzugt gegen die freie Stirnfläche der Spreizhülse. Ein solcher Anschlagabsatz befindet sich typischerweise in einer solchen Tiefe der Spreizbolzenbohrung, damit je nach Auslegung des Spreizbolzens die Kegel die beiden Montageteile im gewünschten Verhältnis überdecken. Aufgrund der Konzeption des Spreizbolzens kann dieser mit seiner Spreizhülse in eine Spreizbolzenbohrung eingesetzt werden, dass dieser bündig mit der angrenzenden, zur Bedienseite weisenden Oberfläche des Montageteils abschließt. Dieses ist bei der beschriebenen Ausgestaltung des Spreizbolzens ohne weiteres möglich, da die Spreizhülse innerhalb der Spreizbolzenbohrungen beim Spannen des Spreizbolzens ortsfest verbleibt.
- Anschließend wird der Spreizbolzen gespannt. Auf den Druckbolzen wird zu diesem Zweck typischerweise ein motorisch angetriebenes Spannwerkzeug aufgesetzt, typischerweise ein elektrisches, insbesondere ein mit einem Akku betriebenes Spannwerkzeug wie beispielsweise ein Akkuschrauber mit einer entsprechenden Aufnahme für die Antriebskontur des Druckbolzens. Ein solches Spannwerkzeug verfügt vorzugsweise über einen Reaktionsarm, über den das als Reaktion auf das Anziehdrehmoment entstehende Reaktionsmoment an der Spreizhülse abgestützt wird. Alternativ kann das Reaktionsmoment auch an einem oder mehreren Bauteilen abgestützt werden, welche formschlüssig mit der Spreizhülse verbundenen sind. Vorzugsweise wird der Einschraubvorgang Weg gesteuert durchgeführt, das heißt: dass eine gewisse Schraubtätigkeit ausgeübt werden muss, um den Konusbolzen in der Spreizhülse um einen definierten Verstellweg zu bewegen, bis der Spreizbolzen bestimmungsgemäß gespannt ist. Die Wegaufnahme erfolgt bei Verwendung eines angetriebenen Spannwerkzeuges, wie beispielsweise eines Akkuschraubers, über die ohnehin vorhandene Motorsteuerung, in dem die Drehwinkeländerungen des Rotors oder der Abtriebswelle erfasst werden. Der Vorgang der Wegsteuerung zum Verspannen des Spreizbolzens mit einer vorgegebenen radialen Vorspannung beginnt, wenn zuvor ein gewisses Voranzugsmoment auf den Spreizbolzen aufgebracht worden ist, um das zum Einführen des Spreizbolzens in die Spreizbohrung notwendige Spiel aufzuheben. Schließlich soll nur derjenige Verstellweg Einfluss auf die Steuerung haben, bei dem auch eine radiale Vorspannung in die Wandung der Spreizbolzenbohrungen eingebracht wird. Vorteilhaft bei einer solchen Wegsteuerung ist, dass Reibung innerhalb des Spreizbolzens, die eine Drehmomentsteuerung zum Verspannen eines solchen Spreizbolzens beeinflussen, die einzubringende radiale Vorspannung nicht nachteilig beeinflussen.

Die Verbindungsanordnung kann ohne Weiteres auch wieder gelöst werden. Hierzu wird in einem ersten Schritt der Druckbolzen ausgeschraubt. Anschließend wird der Konusbolzen durch eine auf diese aufgebrachte Zugkraft herausgezogen. Diese Zugkraft kann beispielsweise mittels einer in die Spreizhülse eingeschraubten Gewindestange aufgebracht werden. Vorzugsweise erfolgt eine Abstützung zum Aufbringen der auf die Gewindestange wirkenden Zugkraft auf der Spreizhülse beispielsweise mit einer Mutter oder einem entsprechenden Werkzeug.

Nachfolgend ist die Erfindung anhand eines Ausführungsbeispiels unter Bezugnahme auf die beigefügten Figuren beschrieben. Es zeigen:
- **Fig.** 1:: Eine perspektivische Ansicht eines erfindungsgemäßen Spreizbolzens, dargestellt nach Art einer Explosionsdarstellung,
- Fig. 2:: eine Schnittdarstellung einer Verbindungsanordnung unter Verwendung des Spreizbolzens der Figur 1 mit nicht gespanntem Spreizbolzen,
- Fig. 3:: die Verbindungsanordnung der Figur 2 mit gespanntem Spreizbolzen,
- **Fig. 4:**: eine Darstellung entsprechend derjenigen der Figur 3 zum Darstellen des Kraftflusses beim Spannen des Spreizbolzens.
- **Fig. 5:**: eine Schnittdarstellung der Verbindungsanordnung der Figuren 2 bis 4 mit einem Lösewerkzeug zum Lösen des Spreizbolzens vor einer Betätigung des Lösewerkzeuges,
- Fig. 6:: die Verbindungsanordnung der Figur 5 mit dem gelösten Spreizbolzen und
- **Fig. 7:**: eine Schnittdarstellung einer Verbindungsanordnung mit gegenüber Figur 2 alternativen axialen Positionierungen des Spreizbolzens relativ zur Trennfuge zwischen den Montageteilen.

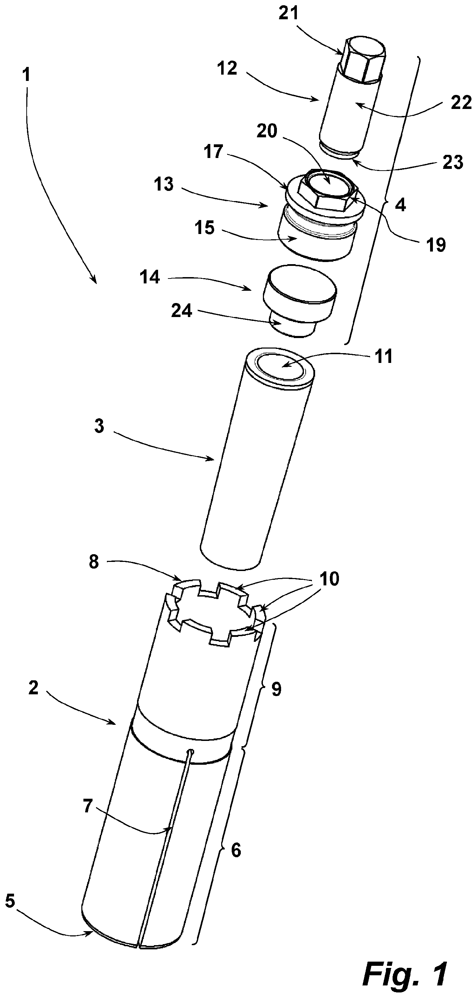

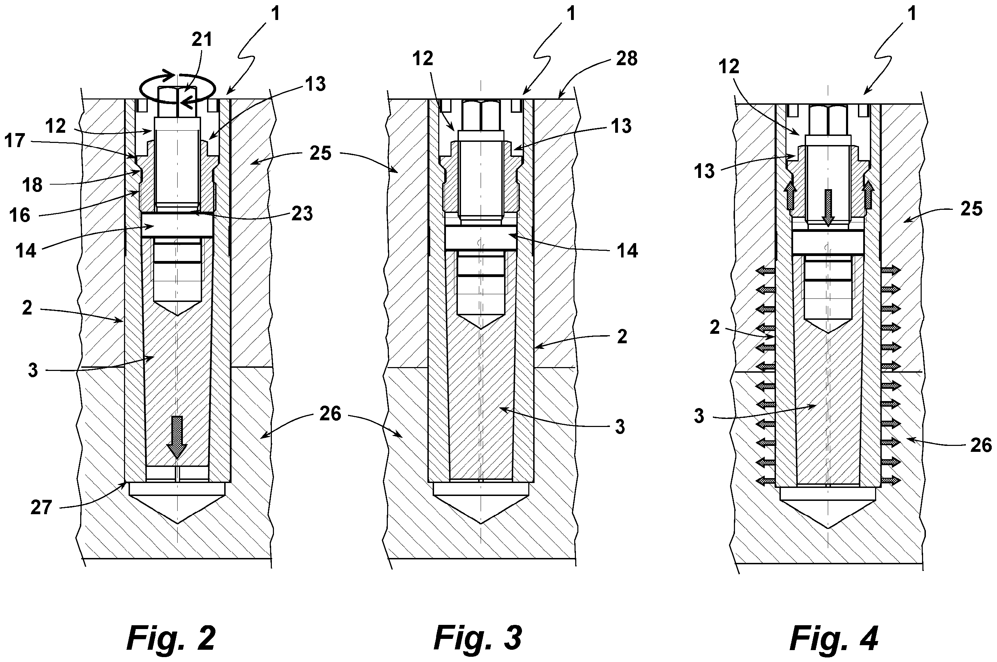

Ein Spreizbolzen 1 umfasst eine Spreizhülse 2, einen Konusbolzen 3 sowie eine Spanneinrichtung 4. Die Spreizhülse 1 des beispielhaft dargestellten Ausführungsbeispiels verfügt über eine zylindrische äußere Mantelfläche und ist bezüglich ihrer Aufweitbarkeit zweigeteilt. Ein das zweite Ende 5 der Spreizhülse umfassender Abschnitt 6 ist innenseitig mit einer sich zum zweiten Ende 5 hin verjüngenden Konusfläche ausgerüstet (zu erkennen in den Schnittdarstellungen der Figuren 2 bis 6). Dieser Abschnitt 6 ist geschlitzt. In Figur 1 ist ein solcher Schlitz 7 erkennbar. Bei dem dargestellten Ausführungsbeispiel verfügt der Abschnitt 6 über zwei einander diametral gegenüberliegende Schlitze 7. Die Schlitze 7 dienen dem Zweck, dass der Abschnitt 6 aufgeweitet, mithin gespreizt werden kann. Dieser Abschnitt 6 kann daher auch als Aufweitabschnitt angesprochen werden. An den Abschnitt 6 schließt sich ein das erste Ende 8 der Spreizhülse 2 tragender Abschnitt 9 an, der im Rahmen dieser Ausführungen auch als erster Endabschnitt angesprochen ist. Die innenwandseitige Strukturierung des ersten Endabschnittes 9 ist nachstehend zu Figur 2 beschrieben.

In das erste Ende 8 der Spreizhülse 2 sind mehrere, mit gleichem Winkelabstand zueinander angeordnete Stützstrukturen 10 vorgesehen, die eine formschlüssige Verbindung zu einer passenden Gegenkontur eines Reaktionsarms eines Spannwerkzeuges ermöglichen. In der bevorzugten Ausgestaltung sind diese Stützstrukturen nach Art des Kronenabschlusses einer Kronenmutter ausgeführt.

Der Konusbolzen 3 des dargestellten Ausführungsbeispiels ist über seine gesamte Längserstreckung mit seiner äußeren Mantelfläche konisch verjüngt. Der Konusabschnitt erstreckt sich somit über die gesamte axiale Erstreckung des Konusbolzens 3. Der Verjüngungswinkel des Konusbolzens 3 sowie derjenige der Innenwandung des Aufweitabschnittes 6 der Spreizhülse 2 sind gleich. Eingebracht in den Konusbolzen 3 ist mindestens ein Gewinde 11, um eine Lösevorrichtung daran zu befestigen. Dargestellt ist das Gewinde 11 als Innengewinde.

Zum Spannen des Spreizbolzens 1 dient eine Spanneinrichtung 4. Diese umfasst bei dem dargestellten Ausführungsbeispiel drei Komponenten, und zwar einen Druckbolzen 12, einen Widerlagerkörper 13 und ein Kraftverteilungselement 14. Der Widerlagerkörper 13 ist so konzipiert, in den ersten Endabschnitt 6 der Spreizhülse 2 eingesetzt und mit der Spreizhülse 2 in axialer Richtung verspannt zu werden. Zu diesem Zweck verfügt der Widerlagerkörper 13 über einen Außengewindeabschnitt 15, der mit einem komplementären Innengewinde 16 der Spreizhülse 2 in ihrem ersten Endabschnitt 6 (siehe Figur 2) zusammenwirkt. Ist der Widerlagerkörper 13 mit seinem Außengewindeabschnitt 15 mit dem Innengewinde 16 der Spreizhülse 2 in Eingriff gestellt, ist dieser in axialer Richtung formschlüssig an die Spreizhülse 2 angeschlossen und von dieser gehalten. Der Widerlagerkörper 13 verfügt des Weiteren über einen oberhalb des Außengewindeabschnittes 15 angeordneten Anschlagflansch 17, der in radialer Richtung den Außengewindeabschnitt 15 überragt. Der Anschlagflansch 17 dient zum Begrenzen einer Einschraubbewegung des Widerlagerkörpers 13 in den ersten Endabschnitt 6 der Spreizhülse 2. Die Spreizhülse 2 trägt in ihrem ersten Endabschnitt 6 zu diesem Zweck einen Anschlagabsatz 18, gegen den der Anschlagflansch 17 des Widerlagerkörpers 13 wirkt (siehe Figur 2). Zum Einschrauben und insbesondere zum Verspannen des Widerlagerkörpers 13 mit der Spreizhülse 2 verfügt ersterer oberseitig über eine Drehmitnahmekontur 19, die bei dem dargestellten Ausführungsbeispiel als Sechskant ausgeführt ist. Der Widerlagerkörper 13 verfügt über eine zentrale Durchgangsbohrung 20. Diese ist mit einem Innengewinde ausgestattet.

Der Druckbolzen 12, mit dem der Spreizbolzen 1 gespannt wird, verfügt an seinem einem Ende über eine Antriebskontur 21, die bei dem dargestellten Ausführungsbeispiel ebenfalls als Sechskant ausgeführt ist. An die Antriebskontur 21 grenzt ein Gewindeabschnitt 22 mit einem zu dem Innengewinde des Widerlagerkörpers 13 komplementären Außengewinde. Der Druckbolzen 12 kämmt somit mit seinem Gewindeabschnitt 22 das Innengewinde der Durchgangsbohrung 20.

Mit seinem der Antriebskontur 21 gegenüberliegenden Fuß 23 ist der Druckbolzen 12 an dem Kraftverteilungselement 14 abgestützt. Das Kraftverteilungselement 14 ist nach Art einer Scheibe ausgeführt, und zwar mit einem Durchmesser, dass diese mit einem notwendigen radialen Spiel in den ersten Endabschnitt 6 der Spreizhülse 2 eingeschoben werden kann. Das Kraftverteilungselement 14 des dargestellten Ausführungsbeispiels verfügt über einen an der von dem Druckbolzen 12 wegweisenden Seite angeformten Zapfen 24, der in die Antriebskontur 11 des Konusbolzens 3 eingreift.

Der zusammengesetzte und damit vormontierte Spreizbolzen 1 ist, eingesetzt in die zueinander koaxial angeordneten Spreizbolzenbohrungen zweier miteinander zu verbindender Montageteile 25, 26, in Figur 2 gezeigt. Vormontiert ist der Spreizbolzen 1, indem der Konusbolzen 3 in die Spreizhülse 2 eingesteckt wird, sodass die beiden zusammenwirkenden Konusflächen aneinander anliegen. Anschließend wird das Kraftverteilungselement 14 in die Spreizhülse 2 eingeschoben. Anschließend wird der Widerlagerkörper 3 mit oder ohne darin eingefädelten Druckbolzen 12 in die Spreizhülse 2 eingeführt mit seinem Außengewindeabschnitt 15 auf das Innengewinde 16 der Spreizhülse 2 eingeschraubt, und zwar bis der Anschlagflansch 17 des Widerlagerkörpers 13 an dem Anschlagabsatz 18 der Spreizhülse anliegt, so dass der Widerlagerkörper 13 mit seinem Anschlagflansch 17 mit dem Anschlagabsatz 18 der Spreizhülse 2 verspannt werden kann. Bei dem dargestellten Ausführungsbeispiel sind die diesbezüglich miteinander zusammenwirkenden Anschlagflächen mit einem Winkel von 45° in Richtung zur Längsachse des Spreizbolzens 1 geneigt. Die bei dem dargestellten Ausführungsbeispiel vorgesehene Neigung der zusammenwirkenden Anschlagflächen von 45° in Richtung der Längsachse kann durchaus auch anders ausgelegt sein. Beispielsweise sind auch eine Ausrichtung der zusammenwirkenden Anschlagflächen von 90° gegenüber der Längsachse oder auch andere Winkel möglich. Ist der Druckbolzen 12 nicht zusammen mit dem Widerlagerkörper 13 montiert worden, wird abschließend der Druckbolzen 12 mit seinem Gewindeabschnitt 22 in die mit einem Innengewinde ausgerüstete Durchgangsbohrung 20 des Widerlagerkörpers 13 eingeschraubt. Insofern kann der Spreizbolzen 1 samt Spanneinrichtung 4 als ein Stück gehandhabt werden. Keines der Bestandteile des Spreizbolzens 1 ragen über den Außendurchmesser der zylindrischen Mantelfläche der Spreizhülse 2 hinaus.

Die Spreizbolzenbohrung des Montageteils 26 verfügt über einen Anschlagabsatz 27, durch den der Durchmesser der Spreizbolzenbohrung reduziert wird. Dieser Anschlagabsatz 27 wirkt gegen die das zweite Ende 5 bereitstellende freie Stirnfläche der Spreizhülse 2, um den Spreizbolzen 1 relativ zur Trennfuge zwischen den Montageteilen 25 und 26 zu positionieren.

In einer alternativen Ausgestaltung werden sowohl die Bohrung im ersten Montageteil als auch die Spreizhülse im Bereich des ersten Endabschnittes mit einem größeren Durchmesser als die Bohrung im zweiten Montageteil ausgeführt. Dadurch ergibt sich in axialer Richtung ein Anschlagabsatz zwischen der Spreizhülse 2 und dem ersten Montageteil, mit dem der Spreizbolzen relativ zur Trennfuge positioniert wird.

In einer weiteren alternativen Ausgestaltung werden sowohl die Bohrung im ersten Montageteil als auch die Spreizhülse bis zur Trennfuge mit einem größeren Durchmesser als die Bohrung im zweiten Montageteil ausgeführt. Dadurch ergibt sich in axialer Richtung ein Anschlagabsatz zwischen der Spreizhülse und dem zweiten Montageteil, mit dem der Spreizbolzen relativ zur Trennfuge positioniert wird.

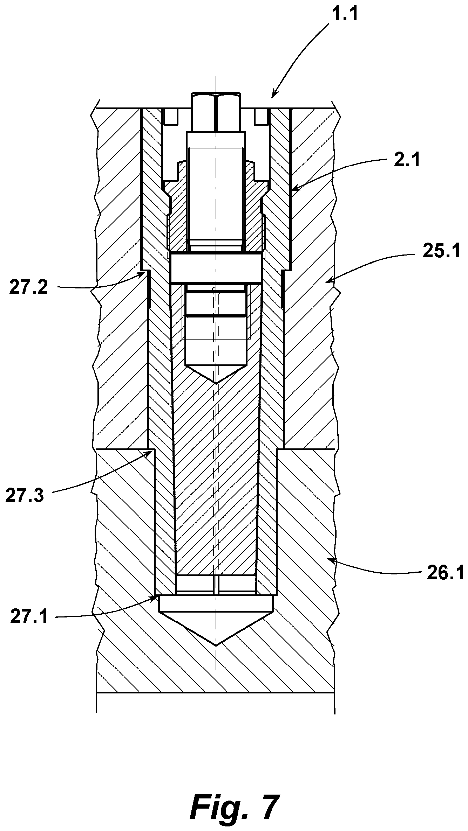

In Figur 7 sind die beiden vorstehend angesprochenen Alternativen einer Abstützung einer Spreizhülse 2.1 in der Spreizbolzenbohrung kumulativ dargestellt. Die Spreizhülse 2.1 verfügt über einen Anschlagabsatz an dem freien Ende des ersten Abschnittes. Dieser Anschlag ist in Figur 7 mit den Bezugszeichen 27.1 kenntlich gemacht. Ein zweiter Anschlagabsatz 27.2 befindet sich innerhalb der in dem Montageteil 25.1 eingebrachten Spreizbolzenbohrung. Ein dritter Anschlagabsatz 27.3 befindet sich im Bereich der Trennfuge zwischen den beiden Montageteilen 25.1, 26.1. Diese Darstellung dient der Illustration der unterschiedlichen Möglichkeiten der Ausbildung eines Anschlagabsatzes zum Begrenzen der Einsetzbewegung der Spreizhülse 2.1 in die Spreizbolzenbohrungen. Typischerweise wird man lediglich einen Anschlagabsatz vorsehen.

Zum Spannen des Spreizbolzens 1 wird ein geeignetes Spannwerkzeug verwendet, welches auf die Antriebskontur 21 des Druckbolzens 12 aufgesetzt wird. Vorzugsweise wird ein Akkuschrauber als Spannwerkzeug eingesetzt. Neben seinem Werkzeug, welches auf die Antriebskontur 21 des Druckbolzens 12 aufgesetzt werden kann, verfügt dieses Spannwerkzeug über einen ringförmigen, als Hülse das eigentliche Spannwerkzeug einfassenden Reaktionsarm, dessen freie Stirnfläche komplementär zu den Strukturen 10 des ersten Endes 8 der Spreizhülse 2 ausgeführt ist. Insofern wird zwischen dem Reaktionsarm des Spannwerkzeuges und der Spreizhülse 2 ein formschlüssiger Eingriff hergestellt. Der Reaktionsarm dreht bei einer Spannbewegung des an die Antriebskontur 21 angeschlossenen Werkzeuges nicht. Ein Spannen des Druckbolzens 12 führt dazu, dass der Druckbolzen 12 mit seinem Fuß 23 gegen die Oberseite des Kraftverteilungselementes 14 wirkt. Das Kraftverteilungselement 14 verteilt die zentrisch im Bereich der Mitte aufgebrachte axiale Kraft auf die zu dem Druckbolzen 12 weisende ringförmige Stirnfläche des Konusbolzens 3, der sodann in Richtung der Konusverjüngung in die Spreizhülse 2 eingeschoben wird. Diese Bewegung des Konusbolzens 3 gegenüber der Spreizhülse 2 führt zu einer Aufweitung der Spreizhülse 2 in ihrem Aufweitabschnitt 6. Diese axiale Bewegung des Konusbolzens 3 beim Spannen des Spreizbolzens 1 ist in Figur 2 durch einen Blockpfeil kenntlich gemacht.

Der Aufweitabschnitt 6 der Spreizhülse 2 ist hinsichtlich seiner axialen Erstreckung in Bezug auf die Spreizbolzenbohrungen der beiden Montageteile 25, 26 so ausgeführt, dass der Aufweitabschnitt 6 mit einem etwa gleichen Abschnitt in jede Spreizbolzenbohrung eingreift.

Der mit den beiden Montageteilen 25, 26 verspannte Spreizbolzen 1 ist in Figur 3 gezeigt. Diese Schnittdarstellung veranschaulicht, dass keine Bestandteile des Spreizbolzens 1 über der zur Bedienseite weisenden Oberfläche 28 des Montageteils 25 hervorstehen. Die Spreizhülse 2 ist auf die vorgesehene Tiefe der zueinander koaxialen Spreizbolzenbohrungen der Montageteile 25, 26 abgestimmt oder umgekehrt: Die Spreizbolzenbohrungen sind an die axiale Länge des Spreizbolzens 1 angepasst. Die Einschraubtiefe beziehungsweise der Verstellweg des Konusbolzens 3 zum Spannen des Spreizbolzens 1 so vorgesehen, dass eine definierte radiale Vorspannung auf die Spreizbolzenbohrungen ausgeübt wird.

Figur 4 zeigt den mit die Montageteilen 25, 26 verbindenden Spreizbolzen 1 mit dem darin mit Blockpfeilen schematisiert eingetragenen Kraftfluss. Durch das Spreizen des Aufweitabschnittes 6 der Spreizhülse 2 wirkt die radiale Vorspannung gegen die Wandung der Spreizbolzenbohrungen der Montageteile 25, 26. Die Einschraubbewegung des Druckbolzens 12, in dieser Darstellung ebenfalls durch einen Blockpfeil schematisiert dargestellt. Diese wird durch den in axialer Richtung formschlüssig mit der Spreizhülse 2 darin gehaltenen Widerlagerkörper 13 aufgefangen, an dem wiederum formschlüssig in axialer Richtung der Druckbolzen 12 gehalten ist. Zum Spannen des Spreizbolzens 1 werden somit keine zusätzlichen Spannwiderlager, wie Gewinde oder dergleichen benötigt. Mithin handelt es sich bei dem Spreizbolzen 1 um einen nach außen gewindefreien Spreizbolzen.

Die Überwachung beziehungsweise Steuerung des Spannvorganges wird mit den in der Beschreibungseinleitung angegebenen Verfahrensschritten vorgenommen.

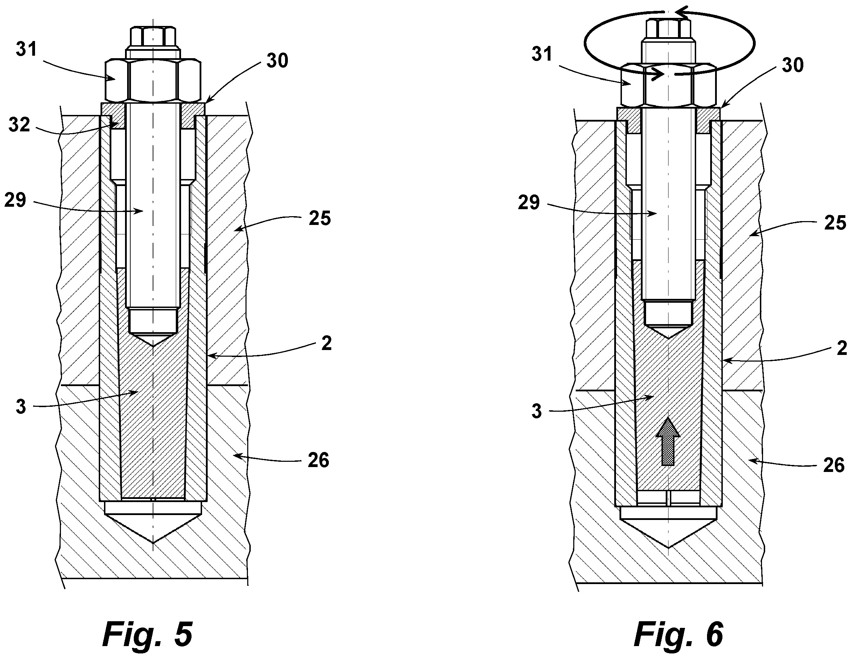

Vor dem vorstehend geschilderten Hintergrund, dass der Konusbolzen 3 in axialer Richtung zum Spannen des Spreizbolzens 1 in die Spreizhülse 2 eingedrückt worden ist, kann der Spreizbolzen 1 mit einfachen Mitteln auch wieder gelöst und sodann aus den Spreizbolzenbohrungen herausgenommen werden. Der Lösevorgang ist nachstehend beschrieben:
Wenn die Verbindungsanordnung, umfassend die beiden miteinander zu verbindenden Montageteile 25, 26 und den diese Montageteile 25, 26 verbindenden Spreizbolzen 1, gelöst werden soll, wird zunächst der Druckbolzen 12 aus dem Widerlagerkörper 13 herausgeschraubt. Anschließend wird der Widerlagerkörper 13 aus der Spreizhülse 2 ausgeschraubt, wobei Letzteres auch zusammen mit dem darin befindlichen Druckbolzen 12 vorgenommen werden kann. In einem nächsten Schritt wird das Kraftverteilungselement 14 auch der Spreizhülse 2 entnommen, sodass dann die Antriebskontur 11, die bei dem dargestellten Ausführungsbeispiel als Innengewinde ausgeführt ist, von der Bedienseite her zugänglich ist. In diese Antriebskontur 11 des Konusbolzens 3 wird eine Gewindestange 29 eingeschraubt (siehe Figur 5). Die Gewindestange 29 trägt an ihrem in die Antriebskontur 11 eingeschraubten Ende einen im Durchmesser reduzierten zapfenartigen Fortsatz, mit dem die Gewindestange 29 mit dem Boden der die Antriebskontur 11 bereitstellenden Bohrung verspannt wird. Die Gewindestange 29 ragt über das freie Ende der Spreizhülse 2 hinaus. Auf den aus der Spreizbolzenbohrung des Montageteils 25 herausragenden Abschnitt der Gewindestange 29 wird eine Stützscheibe 30 aufgesetzt und anschließend eine Mutter 31 auf die Gewindestange 29 aufgeschraubt. Die Mutter 31 stützt sich auf der Oberseite der Stützscheibe 30 ab. Zum Führen der Gewindestange 29 und zum Positionieren der Stützscheibe 30 verfügt diese über einen in die Spreizhülse 2 eingreifenden ringförmigen Fortsatz 32. Durch simples Aufschrauben der Mutter 31 auf die an den Konusbolzen 3 angeschlossene Gewindestange 29 wird der Konusbolzen 3 aus der Spreizhülse 2 herausgezogen, wie dieses in Figur 6 durch einen Blockpfeil kenntlich gemacht ist. Ist der Konusbolzen 3 hinreichend weit aus der Spreizhülse 2 herausgezogen, dass die radiale Vorspannung abgebaut ist, können anschließend der Konusbolzen 3 und die Spreizhülse 2 aus den zueinander koaxial angeordneten Spreizbolzenbohrungen der Montageteile 25, 26 herausgezogen werden.

Die Erfindung ist anhand von Ausführungsbeispielen beschrieben. Ohne den Umfang der geltenden Ansprüche zu verlassen, ergeben sich für einen Fachmann zahlreiche weitere Möglichkeiten diese umzusetzen, ohne dass diese im Rahmen dieser Ausführungen dargelegt werden müssten.

**Bezugszeichenliste**

| | | | |
|---|---|---|---|
| 1, 1.1 | Spreizbolzen | 31 | Mutter |
| 2, 2.1 | Spreizhülse | 32 | Fortsatz |
| 3 | Konusbolzen | | |
| 4 | Spanneinrichtung | | |
| 5 | zweites Ende | | |
| 6 | Aufweitabschnitt/Abschnitt | | |
| 7 | Schlitz | | |
| 8 | erstes Ende | | |
| 9 | Abschnitt | | |
| 10 | Stützstruktur | | |
| 11 | Anschlusskontur/Innengewinde | | |
| 12 | Druckbolzen | | |
| 13 | Widerlagerkörper | | |
| 14 | Kraftverteilungselement | | |
| 15 | Außengewindeabschnitt | | |
| 16 | Innengewinde | | |
| 17 | Anschlagflansch | | |
| 18 | Anschlagabsatz | | |
| 19 | Drehmitnahmekontur | | |
| 20 | Durchgangsbohrung | | |
| 21 | Antriebskontur | | |
| 22 | Gewindeabschnitt | | |
| 23 | Fuß | | |
| 24 | Zapfen | | |
| 25, 25.1 | Montageteil | | |
| 26, 26.1 | Montageteil | | |
| 27, 27.1, 27.2, 27.3 | Anschlagabsatz | | |
| 28 | Oberfläche | | |
| 29 | Gewindestange | | |
| 30 | Stützscheibe | | |

## Patentansprüche

1. Lösbarer Spreizbolzen mit
- einer Spreizhülse (2, 2.1) mit einem ersten Ende (8), einem zweiten Ende (5), einer zylindrischen äußeren Mantelfläche und innenseitig mit einem zum zweiten Ende (5) hin die Querschnittsfläche verjüngenden Innenkonusabschnitt,
- einem Konusbolzen (3) mit einem mit dem Innenkonusabschnitt der Spreizhülse (2, 2.1) zum Spreizen derselben infolge einer axialen Relativbewegung von Spreizhülse (2, 2.1) und Konusbolzen (3) zusammenwirkenden Konusabschnitt und
- einer an den das erste Ende (8) der Spreizhülse (2) bereitstellenden Endabschnitt angeschlossene Spanneinrichtung (4) zum Verstellen des Konusbolzens (3) in axialer Richtung gegenüber der Spreizhülse (2, 2.1),
**dadurch gekennzeichnet, dass** die Spanneinrichtung (4) einen im Bereich des ersten Endabschnittes der Spreizhülse (2, 2.1) in axialer Richtung formschlüssig gehaltenen und in axialer Richtung gegenüber der Spreizhülse (2, 2.1) verstellbaren Druckbolzen (12) mit einer Antriebskontur (21) an seinem außenseitigen Ende umfasst, dessen der Antriebskontur (21) gegenüberliegender Fuß (23) auf den Konusbolzen (3) beim Spannen des Druckbolzens (12) zum Aufweiten der Spreizhülse (2) wirkt und dass in die zu der Spanneinrichtung (4) weisende Endfläche des Konusbolzens (3) mindestens eine Anschlusskontur (11) zum in axialer Richtung formschlüssigen Anschließen eines Anschlussteils (29) eines Lösewerkzeuges zum Lösen des gespannten Spreizbolzens (1) durch Herausziehen des Konusbolzens (3) aus der Spreizhülse (2) eingebracht ist.

2. Spreizbolzen nach Anspruch 1, **dadurch gekennzeichnet, dass** der Druckbolzen mit der Spreizhülse über ein Gewinde in Eingriff gestellt und gegenüber dieser in axialer Richtung verstellbar ist.

3. Spreizbolzen nach Anspruch 1, **dadurch gekennzeichnet, dass** die Spanneinrichtung (4) einen innenseitig an den ersten Endabschnitt der Spreizhülse (2, 2.1) in axialer Richtung formschlüssig angeschlossen Widerlagerkörper (13) mit einer zentralen, mit einem Innengewinde ausgerüsteten Durchgangsbohrung (20) umfasst und der Druckbolzen (12) das Innengewinde der Durchgangsbohrung (20) des Widerlagerkörpers (13) kämmt.

4. Spreizbolzen nach Anspruch 3, **dadurch gekennzeichnet, dass** der Widerlagerkörper (13) mit der Spreizhülse (2, 2.1) verschraubt ist und die Spreizhülse (2, 2.1) in ihrem ersten Endabschnitt ein Innengewinde (16) und der Widerlagerkörper (13) ein dazu komplementäres Außengewinde (15) tragen.

5. Spreizbolzen nach Anspruch 3, **dadurch gekennzeichnet, dass** der Widerlagerkörper aus mehreren Bauteilen besteht, die formschlüssig miteinander verbunden sind, wobei eines dieser Bauteile mit der Spreizhülse verschraubt ist und ein anderes Bauteil eine Durchgangsbohrung mit Innengewinde aufweist, in die der Druckbolzen eingeschraubt ist.

6. Spreizbolzen nach einem der Ansprüche 1 bis 5, **dadurch gekennzeichnet, dass** zwischen dem Fuß (23) des Druckbolzens (12) und dem Konusbolzen (3) ein Kraftverteilungselement (14) zum Übertragen der über den Fuß (23) des Druckbolzens (12) bereitgestellten Spannkraft auf den Konusbolzen (3) angeordnet ist.

7. Spreizbolzen nach Anspruch 6, **dadurch gekennzeichnet, dass** das Kraftverteilungselement (14) nach Art einer Scheibe ausgebildet ist, deren Durchmesser größer ist als der Durchmesser des Fußes (23) des Druckbolzens (12).

8. Spreizbolzen nach Anspruch 7, **dadurch gekennzeichnet, dass** das Kraftübertragungselement an seiner zu dem Konusbolzen weisenden Seite im Bereich seines radialen Abschlusses einen äußeren umlaufenden Druckring trägt.

9. Spreizbolzen nach einem der Ansprüche 1 bis 8, **dadurch gekennzeichnet, dass** das Kraftverteilungselement (14) an seiner zu dem Konusbolzen (3) weisenden Seite einen in die Anschlusskontur (11) eingreifenden Zapfen (24) trägt.

10. Spreizbolzen nach einem der Ansprüche 1 bis 9, **dadurch gekennzeichnet, dass** die in den Konusbolzen (3) eingebrachte Anschlusskontur (11) ein Innengewinde ist.

11. Spreizbolzen nach einem der Ansprüche 1 bis 10, **dadurch gekennzeichnet, dass** die Spreizhülse (2, 2.1) und/oder der Widerlagerkörper (13) mit radialem Abstand zum Druckbolzen (12) zumindest eine in axialer Richtung zugängliche Stützstruktur (10) zum formschlüssigen Eingriff und Abstützen des Reaktionsarmes eines Spannwerkzeuges aufweisen.

12. Spreizbolzen nach Anspruch 11, **dadurch gekennzeichnet, dass** in Umfangsrichtung mehrere gleichartige und mit gleichem Winkelabstand und mit Abstand zueinander angeordnete Stützstrukturen (10) vorgesehen sind und die Stützstrukturen (10) nach Art eines Kronenabschlusses einer Kronenmutter für den Eingriff einer stirnseitig eine hierzu komplementäre Eingriffskontur aufweisenden Hülse als koaxialer Reaktionsarm eines Spannwerkzeuges ausgeführt sind.

13. Verbindungsanordnung umfassend einen Spreizbolzen (1, 1.1) nach einem der Ansprüche 3 bis 12 sowie zumindest zwei miteinander zu verbindende Montageteile (25, 26; 25.1, 26.1), **dadurch gekennzeichnet, dass** die miteinander zu verbindenden Montageteile (25, 26; 25.1, 26.1) zum Einsetzen des Spreizbolzens (1, 1.1) jeweils zueinander koaxiale Spreizbolzenbohrungen aufweisen, in welche der Spreizbolzen (1, 1.1) eingesetzt und darin infolge der radialen Aufweitung seiner Spreizhülse (2, 2.1) bei gespanntem Spreizbolzen (1, 1.1) verspannt gehalten und dass die Spanneinrichtung (4) mit ihrer Außenseite bündig mit der angrenzenden Oberfläche (28) des bedienseitig angeordneten Montageteils (25) abschließt oder gegenüber dieser abgesenkt ist, wenn der Spreizbolzen (1) gespannt ist.

14. Verbindungsanordnung nach Anspruch 13, **dadurch gekennzeichnet, dass** die Einstecktiefe des Spreizbolzens (1, 1.1) in die zueinander koaxialen Spreizbolzenbohrungen der miteinander zu verbindenden Montageteile (25, 26; 15.1, 26.1) durch einen gegen die Spreizhülse (2, 2.1) wirkenden Anschlagabsatz (27, 27.1, 27.2, 27.3) begrenzt ist.

15. Verfahren zum Erstellen einer Verbindungsanordnung nach einem der Ansprüche 13 oder 14 mit folgenden Schritten:
- Anordnen der miteinander zu verbindenden, jeweils eine Spreizbolzenbohrung aufweisenden Montageteile (25, 26; 25.1, 26.1), damit ihre Spreizbolzenbohrungen zueinander koaxial ausgerichtet sind,
- Einsetzen des bezüglich seiner Bestandteile vormontierten Spreizbolzens (1, 1.1) in die Spreizbolzenbohrungen und
- Spannen des Spreizbolzens (1, 1.1) durch Anziehen des Druckbolzens (12) mittels eines motorisch angetriebenen Spannwerkzeuges zunächst drehmomentgesteuert bis zu einem Voranzugsmoment, um das radiale Spiel zwischen Spreizbolzen (1, 1.1) und den Spreizbolzenbohrungen aufzuheben, und anschließend weggesteuert mittels einer Winkelmessung, um den Konusbolzens (3) in die Spreizhülse (2, 2.1) einzudrücken und letztere definiert aufzuweiten.

## Claims

1. Releasable expanding bolt with
- an expanding sleeve (2, 2.1) with a first end (8), a second end (5), a cylindrical outer jacket surface and, on the inside, with an inner cone section tapering towards the second end (5),
- a cone bolt (3) with a cone section cooperating with the inner cone section of the expanding sleeve (2, 2.1) for expanding the same as a result of an axial relative movement of the expanding sleeve (2, 2.1) and the cone bolt (3), and
- a clamping device (4), connected to the end section providing the first end (8) of the expanding sleeve (2), for adjusting the cone bolt (3) in the axial direction with respect to the expanding sleeve (2, 2.1),
**characterized in that** the clamping device (4) comprises a thrust bolt (12) which is held in a positive-locking manner in the axial direction in the region of the first end section of the expanding sleeve (2, 2.1) and can be adjusted in the axial direction relative to the expanding sleeve (2, 2.1) and has a drive contour (21) at its outer end, the foot (23) of which, lying opposite the drive contour (21), acts on the cone bolt (3) during clamping of the thrust bolt (12) in order to expand the expanding sleeve (2), and **in that** at least one connecting contour (11) is provided in the end face of the cone bolt (3) facing the clamping device (4) for the positive connection in the axial direction of a connecting part (29) of a release tool for releasing the clamped expanding bolt (1) by pulling the cone bolt (3) out of the expanding sleeve (2).

2. Expanding bolt according to claim 1, **characterized in that** the pressure bolt is brought into engagement with the expanding sleeve via a thread and is adjustable in the axial direction relative to the latter.

3. Expanding bolt according to claim 1, **characterized in that** the clamping device (4) comprises an abutment body (13), which is positively connected on the inside to the first end section of the expanding sleeve (2, 2.1) in the axial direction and has a central through-bore (20) equipped with an internal thread, and the pressure bolt (12) meshes with the internal thread of the through-bore (20) of the abutment body (13).

4. Expanding bolt according to claim 3, **characterized in that** the abutment body (13) is screwed to the expanding sleeve (2, 2.1) and the expanding sleeve (2, 2.1) has an internal thread (16) in its first end section and the abutment body (13) has an external thread (15) complementary thereto.

5. Expanding bolt according to claim 3, **characterized in that** the abutment body comprises a plurality of components which are connected to one another in a form-fitting manner, wherein one of these components is screwed to the expanding sleeve and another component has a through-bore with an internal thread into which the pressure bolt is screwed.

6. Expanding bolt according to any one of claims 1 to 5, **characterized in that** a force distribution element (14) for transmitting the clamping force provided via the foot (23) of the pressure bolt (12) to the cone bolt (3) is arranged between the foot (23) of the pressure bolt (12) and the cone bolt (3).

7. Expanding bolt according to claim 6, **characterized in that** the force distribution element (14) is designed in the manner of a disk, the diameter of which is greater than the diameter of the foot (23) of the thrust bolt (12).

8. Expanding bolt according to claim 7, **characterized in that** the force transmission element carries an outer circumferential pressure ring on its side facing the cone bolt in the region of its radial termination.

9. Expanding bolt according to any one of claims 1 to 8, **characterized in that** the force-distributing element (14) carries, on its side pointing towards the cone bolt (3), a pin (24) engaging in the connecting contour (11).

10. Expanding bolt according to any one of claims 1 to 9, **characterized in that** the connecting contour (11) introduced into the cone bolt (3) is an internal thread.

11. Expanding bolt according to any one of claims 1 to 10, **characterized in that** the expanding sleeve (2, 2.1) and/or the abutment body (13) have, at a radial distance from the pressure bolt (12), at least one supporting structure (10), which is accessible in the axial direction, for positive engagement and support of the reaction arm of a clamping tool.

12. Expanding bolt according to claim 11, **characterized in that** a plurality of supporting structures (10) of the same type are provided in the circumferential direction and are arranged at the same angular spacing and at a spacing from one another, and the supporting structures (10) are designed in the manner of a crown closure of a crown nut for the engagement of a sleeve having an engagement contour complementary thereto on the end face as a coaxial reaction arm of a clamping tool.

13. Connection assembly comprising an expanding bolt (1, 1.1) according to any one of claims 3 to 12 and at least two mounting parts (25, 26; 25.1, 26.1) to be connected to one another, **characterized in that** the mounting parts (25, 26; 25.1, 26.1) to be connected to one another have in each case expanding bolt bores which are coaxial with one another for inserting the expansion bolt (1, 1.1) and in which the expanding bolt (1, 1.1) is inserted and is held clamped therein as a result of the radial expansion of its expanding sleeve (2, 2.1) when the expanding bolt (1, 1.1) is clamped, and that the clamping device (4) ends with its outer side flush with the adjacent surface (28) of the assembly part (25) arranged on the operator side or is lowered relative to this when the expanding bolt (1) is clamped.

14. Connection assembly according to claim 13, **characterized in that** the depth of insertion of the expanding bolt (1, 1.1) into the mutually coaxial expanding bolt bores of the mounting parts (25, 26; 15.1, 26.1) to be connected to one another is limited by a stop shoulder (27, 27.1, 27.2, 27.3) acting against the expanding sleeve (2, 2.1).

15. A method for producing a connection assembly according to any one of claims 13 or 14, comprising the following steps:
- Arranging the mounting parts (25, 26; 25.1, 26.1) to be connected to one another, each having an expanding bolt bore, so that their expanding bolt bores are aligned coaxially with one another,
- Inserting the expanding bolt (1, 1.1) preassembled with respect to its components into the expanding bolt bores, and
- Clamping the expanding bolt (1, 1.1) by tightening the pressure bolt (12) by means of a motor-driven clamping tool, first torque-controlled up to a pre-tightening torque, in order to cancel out the radial play between the expanding bolt (1, 1.1) and the expanding bolt bores, and then path-controlled by means of an angle measurement, in order to press the cone bolt (3) into the expanding sleeve (2, 2.1) and expand the latter in a defined manner.

## Revendications

1. Boulon d'écartement détachable avec
- une douille expansible (2, 2.1) présentant une première extrémité (8), une deuxième extrémité (5), une surface enveloppe extérieure cylindrique et, à l'intérieur, une section conique intérieure dont la section transversale se rétrécit en direction de la deuxième extrémité (5),
- un boulon conique (3) avec une section conique coopérant avec la section conique intérieure de la douille d'expansion (2, 2.1) pour l'expansion de celle-ci suite à un mouvement relatif axial de la douille d'expansion (2, 2.1) et du boulon conique (3), et
- un dispositif de serrage (4), raccordé à la section terminale fournissant la première extrémité (8) de la douille d'expansion (2), pour déplacer le boulon conique (3) dans la direction axiale par rapport à la douille d'expansion (2, 2.1),
**caractérisé en ce que** le dispositif de serrage (4) comprend un boulon de pression (12) maintenu dans la zone de la première partie d'extrémité de la douille d'écartement (2, 2.1) dans la direction axiale par complémentarité de formes et réglable dans la direction axiale par rapport à la douille d'écartement (2, 2.1), avec un contour d'entraînement (21) à son extrémité extérieure, dont le pied (23) opposé au contour d'entraînement (21) agit sur le boulon conique (3) lors du serrage du boulon de pression (12) pour élargir la douille d'écartement (2), et **en ce que** au moins un contour de raccordement (11) est introduit dans la surface d'extrémité du boulon conique (3) tournée vers le dispositif de serrage (4) pour le raccordement, dans la direction axiale, par complémentarité de forme, d'une pièce de raccordement (29) d'un outil de desserrage pour desserrer le boulon d'écartement (1) tendu par retrait du goujon conique (3) de la douille d'écartement (2).

2. Boulon d'écartement selon la revendication 1, **caractérisé en ce que** le boulon de pression est mis en prise avec la douille d'écartement par l'intermédiaire d'un filetage et est réglable par rapport à celle-ci dans la direction axiale.

3. Boulon d'écartement selon la revendication 1, **caractérisé en ce que** le dispositif de serrage (4) comprend un corps de butée (13) raccordé à l'intérieur à la première section d'extrémité de la douille d'écartement (2, 2.1) par complémentarité de forme dans la direction axiale, avec un perçage traversant central (20) équipé d'un filetage intérieur, et le boulon de pression (12) engrène le filetage intérieur de l'alésage traversant (20) du corps de butée (13).

4. Boulon d'écartement selon la revendication 3, **caractérisé en ce que** le corps de butée (13) est vissé avec la douille d'écartement (2, 2.1) et la douille d'écartement (2, 2.1) porte dans sa première section d'extrémité un filetage intérieur (16) et le corps de butée (13) porte un filetage extérieur (15) complémentaire à celui-ci.

5. Boulon d'écartement selon l'une quelconque des revendication 3, **caractérisé en ce que** le corps de butée est constitué de plusieurs composants qui sont reliés entre eux par liaison de forme, dans lequel l'un de ces composants étant vissé à la douille d'écartement et un autre composant présentant un alésage traversant équipé d'un filetage intérieur, dans lequel le boulon de pression est vissé.

6. Boulon d'écartement selon l'une quelconque des revendications 1 à 5, **caractérisé en ce qu'**entre le pied (23) du boulon de pression (12) et le boulon conique (3) est disposé un élément de répartition des forces (14) pour transmettre la force de serrage fournie par le pied (23) du boulon de pression (12) au boulon conique (3).

7. Boulon d'écartement selon la revendication 6, **caractérisé en ce que** l'élément de répartition des forces (14) est réalisé à la manière d'un disque dont le diamètre est supérieur au diamètre du pied (23) du boulon de pression (12).

8. Boulon d'écartement selon la revendication 7, **caractérisé en ce que** l'élément de transmission de force porte, sur son côté orienté vers le boulon conique, dans la zone de sa terminaison radiale, une bague de pression périphérique extérieure.

9. Boulon d'écartement selon l'une quelconque des revendications 1 à 8, **caractérisé en ce que** l'élément de répartition des forces (14) porte, sur son côté orienté vers le boulon conique (3), un tenon (24) s'engageant dans le contour de raccordement (11).

10. Boulon d'écartement selon l'une quelconque des revendications 1 à 9, **caractérisé en ce que** le contour de raccordement (11) introduit dans le boulon conique (3) est un filetage intérieur.

11. Boulon d'écartement selon l'une quelconque des revendications 1 à 10, **caractérisé en ce que** la douille d'écartement (2, 2.1) et/ou le corps de butée (13) présentent, à distance radiale du boulon de pression (12), au moins une structure d'appui (10) accessible dans la direction axiale, pour l'engagement par complémentarité de formes et l'appui du bras de réaction d'un outil de serrage.

12. Boulon d'écartement selon la revendication 11, **caractérisé en ce qu'**il est prévu dans la direction périphérique plusieurs structures d'appui (10) de même type et disposées à la même distance angulaire et à distance les unes des autres, et **en ce que** les structures d'appui (10) sont réalisées sous la forme d'un bras de réaction coaxial d'un outil de serrage à la manière d'une terminaison de couronne d'un écrou de couronne pour l'engagement d'une douille présentant du côté frontal un contour d'engagement complémentaire à celui-ci.

13. Dispositif de liaison comprenant un boulon d'écartement (1, 1.1) selon l'une quelconque des revendications 3 à 12 ainsi qu'au moins deux parties de montage (25, 26 ; 25.1, 26.1) à relier entre elles, **caractérisé en ce que** les parties de montage (25, 26 ; 25.1, 26.1) à relier entre elles présentent pour l'insertion du boulon d'écartement (1, 1.1), des alésages de boulon d'écartement respectifs coaxiaux entre eux, dans lesquels le boulon d'écartement (1, 1.1) est inséré et y est maintenu serré par suite de l'élargissement radial de sa douille expansible (2, 2.1) lorsque le boulon expansible (1, 1.1) est tendu, et **en ce que** le dispositif de serrage (4) se termine par son côté extérieur à fleur de la surface (28) adjacente de la pièce de montage (25) disposée côté service ou est abaissé par rapport à celle-ci lorsque le boulon expansible (1) est tendu.

14. Dispositif de liaison selon la revendication 13, **caractérisé en ce que** la profondeur d'insertion du boulon d'écartement (1, 1.1) dans les alésages de boulon d'écartement coaxiaux entre eux des pièces de montage (25, 26 ; 15.1, 26.1) à relier entre elles est limitée par un épaulement de butée (27, 27.1, 27.2, 27.3) agissant contre la douille d'écartement (2, 2.1).

15. Procédé de réalisation d'un agencement de connexion selon l'une quelconque des revendications 13 ou 14, comprenant les étapes suivantes :
- disposition des pièces de montage (25, 26 ; 25.1, 26.1) à relier entre elles et présentant chacune un alésage de boulon d'écartement, afin que leurs alésages de boulon d'écartement soient coaxiaux les uns par rapport aux autres,
- insertion du boulon d'écartement (1, 1.1) prémonté pour ses éléments dans les trous du boulon d'écartement, et
- serrage du goujon d'écartement (1, 1.1) par serrage du goujon de pression (12) au moyen d'un outil de serrage entraîné par un moteur, d'abord par commande de couple jusqu'à un couple de préférence, afin d'annuler le jeu radial entre le boulon d'écartement (1, 1.1) et les alésages du boulon d'écartement, puis commandé par une mesure angulaire, afin d'enfoncer le boulon conique (3) dans la douille d'écartement (2, 2.1) et d'élargir cette dernière de manière définie.
